Europäisches Patentamt

European Patent Office

Office européen des brevets

(19)

(11) Veröffentlichungsnummer : **0 442 890 B1**

# (12) EUROPÄISCHE PATENTSCHRIFT

(45) Veröffentlichungstag der Patentschrift :
15.07.92 Patentblatt 92/29

(21) Anmeldenummer : 89908970.0

(22) Anmeldetag : 10.08.89

(86) Internationale Anmeldenummer :
PCT/EP89/00943

(87) Internationale Veröffentlichungsnummer :
WO 90/05013 17.05.90 Gazette 90/11

(51) Int. Cl.$^5$ : **B01D 29/82,** B01D 29/33,
B30B 9/22

(54) VORRICHTUNG ZUM BETREIBEN EINES AUSPRESSFILTERS.

(30) Priorität : 10.11.88 DE 3838108

(43) Veröffentlichungstag der Anmeldung :
28.08.91 Patentblatt 91/35

(45) Bekanntmachung des Hinweises auf die
Patenterteilung :
15.07.92 Patentblatt 92/29

(84) Benannte Vertragsstaaten :
AT BE CH DE FR GB IT LI LU NL SE

(56) Entgegenhaltungen :
DE-A- 2 703 598
DE-A- 3 343 298
DE-A- 3 517 032
FR-A- 2 267 143

(73) Patentinhaber : HEINKEL
INDUSTRIEZENTRIFUGEN GMBH & CO.
Gottlob-Grotz-Strasse 1
W-7120 Bietigheim-Bissingen (DE)

(72) Erfinder : GERTEIS, Hans
Ruländerweg 7
W-7120 Bietigheim-Bissingen (DE)

(74) Vertreter : Hoeger, Stellrecht & Partner
Uhlandstrasse 14 c
W-7000 Stuttgart 1 (DE)

EP 0 442 890 B1

Jouve, 18, rue Saint-Denis, 75001 PARIS

## Beschreibung

Die Erfindung betrifft eine Vorrichtung zum Betreiben eines Auspreßfilters für Suspensionen mit einem kesselförmigen Außenmantel, mit einem den Außenmantel an seiner offenen Stirnseite lösbar verschließenden Deckel, mit einem vom Deckel koaxial zur Achse des Außenmantels abstehenden, rohrförmigen Filterelement, mit einer koaxial zwischen dem Außenmantel und dem Filterelement angeordneten, umstülpbaren Membran und mit einem Saug- und Druckstutzen am Außenmantel.

Ein derartiger Auspreßfilter ist aus der DE-A-3517032 bekannt. Über den am Außenmantel des Filters vorgesehenen Saug- und Druckstutzen kann im Betrieb des Filters ein auf die Membran wirkender Über- oder Unterdruck erzeugt werden, wobei der Überdruck mit Hilfe eines flüssigen Druckmediums und der Unterdruck mit Hilfe einer Vakuumpumpe erzeugt werden können. Wenn dabei die Membran undicht ist, besteht die Gefahr, daß gegebenenfalls giftige Suspension in das flüssige Druckmedium oder über die Vakuumpumpe ins Freie gelangt, was zu Schäden an Mensch und Umwelt führen kann.

Aus der DE-A-2703598 ist zwar eine Druckversorgungseinheit für ein Auspreßfilter bekannt, es sind dort jedoch keine Maßnahmen vorgesehen, die Druckversorgungseinheit für Steuerungsvorgänge auszunutzen, beispielsweise dann, wenn die Membran undicht geworden ist.

Es ist Aufgabe der Erfindung, eine gattungsgemäße Vorrichtung so auszubilden, daß Undichtigkeiten an der Membran feststellbar sind und auch bei undichter Membran ein Austreten der Suspension in die Umgebung verhindert ist.

Die Aufgabe wird erfindungsgemäß durch folgende Merkmale gelöst:

A. ein Behälter für ein flüssiges Druckmedium, wobei das Druckmedium den unteren Teil des Behälters füllt und über dem Flüssigkeitsspiegel des Druckmediums im Behälter ein Gasraum vorhanden ist;

B. eine erste Leitung zur Überführung von Druckmedium aus dem unteren Teil des Behälters in den Raum zwischen Außenmantel und Membran des Auspreßfilters;

C. eine Druckpumpe in der ersten Leitung;

D. eine zweite Leitung, die den Raum zwischen Außenmantel und Membran des Auspreßfilters mit dem Gasraum des Behälters verbindet;

E. eine Saugpumpe zur Erzeugung eines Unterdrucks im Gasraum des Behälters;

F. eine Flüssigkeitsstandanzeige am Behälter;

G. einstellbare Fühlelemente zum Abfühlen bestimmter Flüssigkeitsstandhöhen im Behälter; und

H. mit den Fühlelementen verbundene Schalter, die bei Erreichen der bestimmten Flüssigkeitsstandhöhen ansprechen und Steuervorgänge für den Auspreßfilter, insbesondere ein Abschalten der Pumpen auslösen.

Die nachstehende Beschreibung bevorzugter Ausführungsformen der Erfindung dient im Zusammenhang mit beiliegender Zeichnung der weiteren Erläuterung. Es zeigen:

Fig. 1 ein Auspreßfilter im geschlossenen Zustand mit einer Vorrichtung zum Betreiben des Filters und

Fig. 2 das Filter aus Fig. 1 in geöffnetem Zustand.

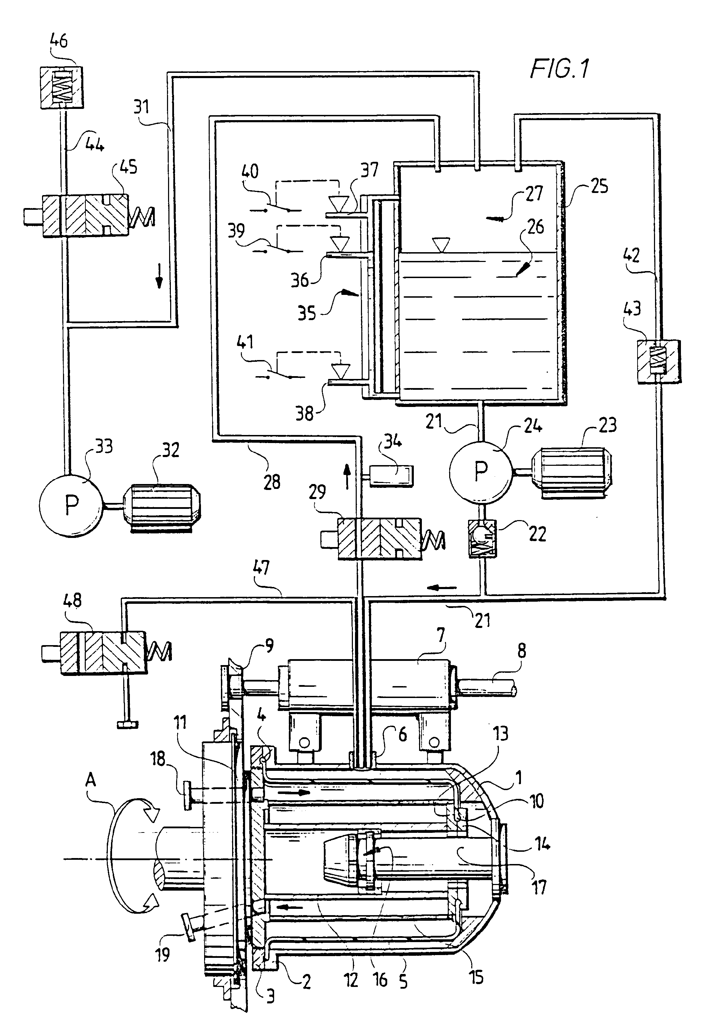

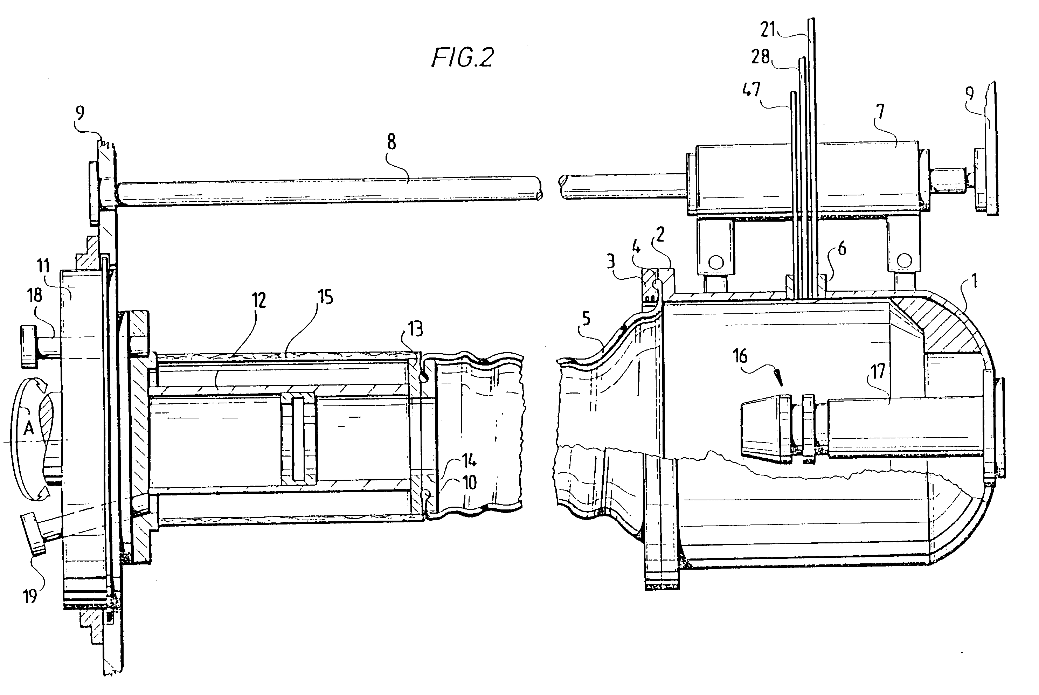

Das auf der Zeichnung dargestellte Auspreßilter umfaßt einen kesselförmigen Außenmantel 1 von kreisrundem Querschnitt, der an seiner einen Stirnseite (in Fig. 1 und 2 rechts) geschlossen und an seiner gegenüberliegenden Stirnseite offen ist. An seiner offenen Stirnseite trägt der Außenmantel 1 einen aus zwei Teilen 2, 3 bestehenden Umfangsflansch, zwischen die der eine Randbereich 4 einer schlauchförmigen Membran 5 aus elastisch dehnbarem Material fest eingespannt ist. Vom Außenmantel 1b geht nach oben ein Saug- und Druckstutzen 6 ab. Der Außenmantel 1 ist ferner über eine Tragkonstruktion mit einer Laufbuchse 7 lösbar verbunden, die auf einer ortsfesten Stange 8 parallel zur Achse des Außenmantels verschieblich ist.

In einem ortsfesten, die Stange 8 tragenden Maschinengestell 9 ist fest oder drehbar ein Deckel 11 zum dichten Verschliessen der offenen Stirnseite des Außenmantels 1 gelagert. Von der dem Außenmantel 1 zugewandten Innenseite des Deckels 11 steht starr ein Rohr 12 ab. Dieses trägt an seinem freien Ende einen Stirnflansch, der ähnlich wie der Flansch an der offenen Stirnseite des Außenmantels 1 aus zwei Teilen 13, 14 besteht. Zwischen diesen Teilen 13, 14 ist der andere Rand 10 der Membran 5 fest eingespannt.

Zwischen der Innenseite des Deckels 11 und dem Flanschteil 13 erstreckt sich ein rohrförmiges Filterelement 15, beispielsweise in Gestalt eines mit einem Filtertuch belegten Siebzylinders. Das Filterelement 15 liegt abgedichtet an der Innenseite des Deckels 11 bzw. Am Flanschteil 13 an.

Im geschlossenen Zustand des Filters (Fig. 1) erstreckt sich die Schlauchförmige Membran 5 koaxial zwischen der Innenseite des Außenmantels 1 und der Außenseite des Filterelements 15. Im geöffneten Zustand des Filters (Fig. 2), wenn also Außenmantel 1 und Deckel 11 durch Verschieben der Buchse 7 auf der Stange 8 in Richtung ihrer gemeinsamen Achse voneinander abgezogen sind, hat sich die Membran 5 gegenüber der Anordnung gemäß Fig. 1 umgestülpt, so daß die Innenseite der Membran numehr zu ihrer Außenseite geworden ist.

Während des eigentlichen Filtriervorganges ist das Auspreßfilter geschlossen (Fig. 1). Dabei ist der Außenmantel 1 über einen im Inneren des Rohres 12 befindlichen Bajonettverschluß 16, der teilweise von einem von der geschlossenen Stirnseite des Außenmantels 1 nach innen vorstehenden Arm 17 getragen wird, fest mit dem Deckel 11 verbunden. Durch Anlegen von Unterdruck an den Stutzen 6 kann die Membran 5 etwa die in Fig. 1 eingezeichnete Stellung einnehmen, so daß über eine am Deckel 11 vorgesehene Zulaufleitung 18 zu filtrierende Suspension eingeleitet werden kann. Nach Beendigung des Einfüllvorgangs kann durch Anlegen von Überdruck an den Stutzen 6 die Membran 5 gegen das Filterelement 15 gedrückt werden, um restliche Flüssigkeit durch das Filterelement hindurchzupressen. Die festen Bestandteile der Suspension verbleiben als Filterkuchen auf dem Filterelement 15, während das durch das Filterelement 15 hindurchgepreßte Filtrat über eine ebenfalls am Deckel 11 vorgesehene Ablaufleitung 19 abfließt. Im geöffneten Zustand des Filters (Fig. 2) kann der Filterkuchen vom Filterelement 15 entfernt werden.

Im Anschluß an einen Filtriervorgang kann das Auspreßfilter gereinigt werden. Die Membran 5 wird hierzu bei geschlossenem Filter wieder durch Unterdruck vom Filterelement 15 abgehoben, wobei sie sich fest an die Innenseite des Außenmantels 1 anpressen kann. Über die Ablaufleitung 19 kann Waschflüssigkeit zur Rückspülung des Filterelements 15 eingebracht werden. Nach dem Waschvorgang kann die Waschflüssigkeit durch Andrücken der unter Überdruck stehenden Membran 5 an das Filterelement 15 abgepreßt werden.

Wenn der Deckel 11 des Auspreßfilters drehbar gelagert ist, kann das Filter während des Filtriervorgangs in Richtung des Doppelpfeils A hin- und herverschwenkt werden, um eine gleichmäßige Ausbildung des Filterkuchens zu gewährleisten. Beim Abwurf des Filterkuchens im geöffneten Zustand des Filters (Fig. 2) kann der Deckel 11 ebenfalls in Richtung des Doppelpfeils A hin- und herverschwenkt werden, um hierdurch den Abwurf des Filterkuchens zu begünstigen.

Die Erzeugung eines Überdrucks auf die Membran 5 erfolgt durch Einleitung eines flüssigen Druckmediums in den Raum zwischen Außenmantel 1 und Membran 5. Hierzu ist, wie in Fig. 1 schematisch dargestellt, der Stutzen 6 mit einer ersten Leitung 21 verbunden, die über ein Rückschlagventil 22 mit der Druckseite einer von einem Elektromotor 23 angetriebenen Hochdruckpumpe 24 verbunden ist. Die Saugseite der Pumpe 24 ist über einen weiteren Abschnitt der Leitung 21 mit der Unterseite eines Behälters 25 verbunden, der ein flüssiges Druckmedium 26, z.B. Wasser oder Öl enthält. Das flüssige Druckmedium 26 füllt nur den unteren Teil des Behälters 25, so daß über dem Flüssigkeitsspiegel des Druckmediums im Behälter ein Gasraum 27 vorhanden ist.

Eine zweite Leitung 28 ist, wie in Fig. 1 schematisch angedeutet, einerseits mit dem Druckstutzen 6 und andererseits mit dem Gasraum 27 des Behälters 25 verbunden. Die Leitung 28 enthält ein vorzugsweise fernsteuerbares Absperrventil 29, das wahlweise in Offen- oder Schließstellung gebracht werden kann. Eine weitere Leitung 31 ist einerseits mit dem Gasraum 27 des Behälters 25 und andererseits mit einer von einem Motor 32 angetriebenen Saug- oder Vakuumpumpe 33 verbunden, so daß Gas, beispielsweise Luft aus dem Gasraum ins Freie abgesaugt werden kann.

Wenn während des Filtriervorgangs auf die Membran 5 ein Druck ausgeübt werden soll, wird von der Pumpe 24 über die Leitung 21 flüssiges Druckmedium 26 aus dem Behälter 25 in den Raum zwischen Außenmantel 1 und Membran 5 des Auspreßfilters gedrückt, so daß sich die Membran 5 dem Filterelement 15 annähert und Flüssigkeit durch dieses hindurchpreßt. Vor der Überführung des Auspreßfilters aus dem geschlossenen in den geöffneten Zustand (Fig. 2) wird die Druckpumpe 24 abgeschaltet und die Saugpumpe 33 in Betrieb genommen, die das Gas aus dem Gasraum 27 abpumpt, so daß das flüssige Druckmedium aus dem Raum zwischen Außenmantel 1 und Membran 5 über die Leitung 28 in den Behälter 25 zurückströmt, wobei sich die Membran 5 vom Filterelement ablöst und nach Vorliegen eines Vakuums im Raum zwischen Außenmantel 1 und Membran 5 an die Innenseite dieses Mantels anlegt.

Wenn beim Betrieb des Auspreßfilters die Membran 5, z.B. nach längerer Betriebszeit, undicht wird und gegebenenfalls giftige Suspension in den Raum zwischen Außenmantel 1 und Membran 5 gelangt, um sich dort mit dem flüssigen Druckmedium 26 zu vermischen, ist sichergestellt, daß diese Mischung nicht in die freie Umgebung, sondern allenfalls in den Behälter 25 gelangt, wo sie keinen Schaden anrichten kann. An der zweiten Leitung 28 kann ein Sensor 34 zur Messung der Veränderung (Verschmutzung) des flüssigen Druckmediums 26 angeordnet sein. Der Sensor 34 spricht an, wenn bei undicht gewordener Membran 5 zu filtrierende Suspension in das flüssige Druckmedium 26 gelangt ist.

Wie weiterhin schematisch in Fig. 1 angedeutet, ist am Behälter 25 eine herkömmliche Flüssigkeitsstandanzeige 35 angeordnet, die den Stand des flüssigen Druckmediums 26 im Behälter 25 anzeigt. Die Flüssigkeitsstandanzeige 35 weist in an sich bekannter Weise einstellbare Fühlelemente 36, 37, 38 auf, die bestimmte Flüssigkeitsstandhöhen im Behälter 25 abfühlen. Mit den Fühlelementen 36, 37, 38 sind, wie in Fig. 1 nur schematisch angedeutet, Schalter 39, 40 bzw. 41 verbunden, die bei Erreichen der betreffenden Flüssigkeitsstandhöhe ansprechen und Steuervorgänge auslösen.

Das mit dem Schalter 39 verbundene Fühlelement 36 zeigt den normalen Stand des flüssigen Druckmediums im Behälter 25 an. Das um einen bestimmten Betrag über dem normalen Flüssigkeitsstand angeordnete, mit dem Schalter 40 verbundene Fühlelement 37 spricht an, wenn die Flüssigkeitsstandhöhe in vorgegebener Weise größer als die normale Flüssigkeitsstandhöhe ist. Die normale Flüssigkeitsstandhöhe liegt im übrigen dann vor, wenn die gesamte Menge des im System enthaltenen flüssigen Druckmediums sich im Behälter 25 befindet. Der Schalter 40 wird als "Maximumschalter" bezeichnet und spricht bei laufender Saugpumpe 33 an, wenn bei Membranbruch zu filtrierende Suspension in das flüssige Druckmedium gelangt ist. Durch den Schalter 40 kann dann die Saugpumpe 33 abgeschaltet und vor Beschädigung bewahrt werden.

Das mit dem Schalter 41 verbundene Fühlelement 38 wird um einen bestimmten Betrag unterhalb der normalen Flüssigkeitsstandhöhe angeordnet, so daß der Schalter 41 als Minimumschalter wirkt und anspricht, wenn die Flüssigkeitsstandhöhe in vorgegebener Weise kleiner als die normale Flüssigkeitsstandhöhe ist. Hierdurch kann beim Laufen der Hochdruckpumpe 24 ein Membranbruch erfaßt werden, weil dann flüssiges Druckmedium durch die beschädigte Membran in die Suspension gelangt und mit dieser über die Ablaufleitung 19 abfließt. Über den Schalter 41 kann in diesem Falle der Motor 23 der Hochdruckpumpe 24 abgeschaltet werden.

Wenn bei laufender Hochdruckpumpe 24 flüssiges Druckmedium in den Raum zwischen Außenmantel 1 und Membran 5 hineingepreßt wird, ist das Absperrventil 29 in der Leitung 28 geschlossen.

Wie weiterhin aus Fig. 1 ersichtlich, ist die erste Leitung 21 hinter der Pumpe 24 über eine Bypaßleitung 42 mit dem unteren, mit flüssigem Druckmedium gefüllten Teil des Behälters 25 verbunden. Die Bypaßleitung 42 enthält ein Überdruckventil 43, das öffnet, wenn der Druck in der ersten Leitung und damit im Raum zwischen Außenmantel 1 und Membran 5 einen bestimmten Wert übersteigt. Hierdurch kann ein unzulässig hoher Druck im Raum zwischen Außenmantel 1 und Membran 5 vermieden werden. Das Überdruckventil 43 kann in an sich bekannter Weise auf bestimmte Druckwerte, bei denen es öffnet, eingestellt werden.

Die Leitung 31 ist mit einer Leitung 44 verbunden, die hintereinander ein z.B. ferngesteuertes Absperrventil 45 sowie ein vorzugsweise einstellbares Unterdruckventil 46 enthält. Das Unterdruckventil 46 öffnet in die freie Atmosphäre. Wenn das Ventil 45 in seiner (in Fig. 1 dargestellten) Offenstellung ist, kann mit Hilfe des Unterdruckventils 46 der Druck im Gasraum 27 bei laufender Saugpumpe 33 auf einen vorbestimmten Wert eingestellt werden.

Zur Überführung des Auspreßfilters aus dem geschlossenen Zustand (Fig. 1) in den geöffneten Zustand (Fig. 2) wird nach dem Entriegeln des Bajonettverschlusses 16 Druckluft in den Raum zwischen dem Außenmantel 1 und der Membran 5 angelegt. Hierzu mündet außer den Leitungen 21 und 28 zusätzlich eine Leitung 47 in den Saug- und Druckstutzen 6, die über ein ferngesteuertes Absperrventil 48 bei Bedarf mit einer (nicht dargestellten) Druckluftquelle verbindbar ist.

Es ist zweckmäßig, bei Überführung des Auspreßfilters aus dem geöffneten Zustand (Fig. 2) in den geschlossenen Zustand (Fig. 1) über die Leitung 28 in der beschriebenen Weise Unterdruck oder Vakuum an den Stutzen 6 anzulegen, weil hierdurch das Einstülpen der Membran 5 erleichtert wird. Es ist sinnvoll, beim Schließen des Auspreßfilters nicht den vollen Saug- oder Vakuumdruck an den Stutzen 6 anzulegen, sondern einen geringeren Druck, der lediglich der besseren Einstülpung des Filters 5 dient. Erst in der Schlußphase des Schließvorgangs, wenn der Außenmantel 1 über der volle Vakuum- oder Saugdruck eingeschaltet.

**Patentansprüche**

1. Vorrichtung zum Betreiben eines Auspreßfilters für Suspensionen mit einem kesselförmigen Außenmantel, mit einem den Außenmantel an seiner offenen Stirnseite lösbar verschließenden Deckel, mit einem vom Dekkel koaxial zur Achse des Außenmantels abstehenden, rohrförmigen Filterelement, mit einer koaxial zwischen dem Außenmantel und dem Filterelement angeordneten, umstülpbaren Membran und mit einem Saug- und Druckstutzen am Außenmantel, **gekennzeichnet durch** folgende Merkmale:

A. ein Behälter (25) für ein flüssiges Druckmedium (26), wobei das Druckmedium den unteren Teil des Behälters füllt und über dem Flüssigkeitsspiegel des Druckmediums im Behälter ein Gasraum (27) vorhanden ist;

B. eine erste Leitung (21) zur Überführung von Druckmedium (26) aus dem unteren Teil des Behälters (25) in den Raum zwischen Außenmantel (1) und Membran (5) des Auspreßfilters;

C. eine Druckpumpe (24) in der ersten Leitung;

D. eine zweite Leitung (28), die den Raum zwischen Außenmantel (1) und Membran (5) des Auspreßfilters mit dem Gasraum (27) des Behälters verbindet;

E. eine Saugpumpe (33) zur Erzeugung eines Unterdrucks im Gasraum (27) des Behälters (25);

F. eine Flüssigkeitsstandanzeige (35) am Behälter (25);

G. einstellbare Fühlelemente (36, 37, 38) zum Abfühlen bestimmter Flüssigkeitsstandhöhen im Behälter (25);
und
H. mit den Fühlelementen (36, 37, 38) verbundene Schalter (39, 40, 41), die bei Erreichen der bestimmten Flüssigkeitsstandhöhen ansprechen und Steuervorgänge für den Auspreßfilter, insbesondere ein Abschalten der Pumpen (24, 33) auslösen.

2. Vorrichtung nach Anspruch 1, gekennzeichnet durch folgendes weiteres Merkmal:
I. ein Maximumschalter (40), der anspricht, wenn die Flüssigkeitsstandhöhe um einen bestimmten Betrag größer als die normale Flüssigkeitsstandhöhe ist, die ihrerseits der Menge des in den Behälter eingefüllten flüssigen Druckmediums entspricht.

3. Vorrichtung nach Anspruch 1, gekennzeichnet durch folgendes weiteres Merkmal:
J. ein Minimumschalter (41), der anspricht, wenn die Flüssigkeitsstandhöhe um einen bestimmten Betrag kleiner als die normale Flüssigkeitsstandhöhe ist, die ihrerseits der Menge des in den Behälter (25) eingefüllten flüssigen Druckmediums (26) entspricht.

4. Vorrichtung nach Anspruch 1, dadurch gekennzeichnet, daß die erste Leitung (21) über eine Bypaßleitung (42) mit dem unteren, flüssigkeitsgefüllten Teil des Behälters (25) verbunden ist, und die Bypaßleitung (42) ein Überdruckventil (43) enthält, das öffnet, wenn der Druck in der ersten Leitung einen bestimmten Wert übersteigt.

5. Vorrichtung nach Anspruch 4, dadurch gekennzeichnet, daß das Überdruckventil (43) auf bestimmte Druckwerte einstellbar ist.

6. Vorrichtung nach Anspruch 1, dadurch gekennzeichnet, daß die Saugpumpe (33) wahlweise über ein Schaltventil (45) mit einem Unterdruckventil (46) verbindbar ist, mit dem der Druck im Gasraum (27) auf einen bestimmten Wert einstellbar ist.

7. Vorrichtung nach Anspruch 1, gekennzeichnet durch eine ventilgesteuerte Druckluftleitung (47) zur Erzeugung eines Luftüberdrucks im Raum zwischen Außenmantel (1) und Membran (5) des Auspreßfilters.

## Claims

1. A device for operating a pressure filter for suspensions, comprising a dosed outer cover, a removable lid for closing the outer cover at its open end, a tubular filter element projecting from the lid coaxially to the axis of the outer cover, a membrane which can be everted arranged coaxially between the outer cover and the filter element, and a pressure and suction connection on the outer cover, **characterized in that** it comprises the following:
A. a container (25) for a liquid pressure medium (26), where the pressure medium fills the lower part of the container and there is a gas space (27) above the liquid level of the pressure medium in the container;
B. a first pipeline (21) for transferring pressure medium (26) from the lower part of the container (25) into the space between the outer cover (1) and the membrane (5) of the pressure filter;
C. a pressure pump (24) in the first pipeline;
D. a second pipeline (28) which connects the space between the outer cover (1) and the membrane (5) of the pressure filter with the gas space (27) in the container;
E. a suction pump (33) for producing a reduced pressure in the gas space (27) of the container (25);
F. a liquid level indicator (35) on the container (25);
G. adjustable sensor elements (36, 37, 38) for detecting predetermined liquid level heights in the container (25);
and
H. switches (39, 40, 41) connected to the sensor elements (36, 37, 38) which operate when the predetermined liquid level heights are reached and trigger control procedures for the pressure filter, in particular a switching off of the pumps (24, 33).

2. A device according to claim 1, characterized by the following additional feature:
I. a maximum level switch (40) which operates when the liquid level height exceeds by a predetermined amount the normal liquid level height which, in its turn, corresponds to the amount of liquid pressure medium put into the container.

3. A device according to claim 1, characterized by the following additional feature:
J. a minimum level switch (41) which operates when the liquid level height is less by a predetermined amount than the normal liquid level height which, in its turn, corresponds to the amount of liquid pressure medium (26) put into the container (25).

4. A device according to claim 1, characterized in that the first pipe line (21) is connected to the lower, liquid-filled part of the container (25) by means of a bypass pipe (42), and in that the bypass pipe (42) includes a pressure relief valve (43) which opens when the pressure in the first pipe line exceeds a predetermined value.

5. A device according to claim 4, characterized in that the pressure relief valve (43) is adjustable to predetermined pressure values.

6. A device according to claim 1, characterized in that the suction pump (33) can optionally be connected through a shut-off valve (45) with a vacuum relief valve (46) by means of which the pressure in the gas space (27) can be set at a predetermined value.

7. A device according to claim 1, characterized by a valve controlled compressed air pipe (47) for producing an excess air pressure in the space between the outer cover (1) and the membrane (5) of the pressure filter.

**Revendications**

1. Dispositif pour la mise en oeuvre d'un filtre-presse pour suspension avec un manteau extérieur cylindrique, avec un couvercle amovible de fermeture du manteau extérieur sur sa face extrême ouverte, avec un élément filtrant tubulaire s'écartant du couvercle coaxialement à l'axe du manteau extérieur, avec une membrane retournable disposée coaxialement entre le manteau extérieur et l'élément filtrant et avec une tubulure d'aspiration et de refoulement sur le corps extérieur, **caractérisé par** les points remarquables suivants:

A. un conteneur (25) pour un fluide liquide (26) de pression, dans lequel ce fluide de pression remplit la partie inférieure du conteneur et une chambre à gaz (27) est ménagée dans le conteneur au-dessus du niveau de fluide de pression;

B. une première conduite (21) pour le passage du fluide de pression (26) de la partie inférieure du conteneur (25) à l'espace existant entre le manteau extérieur (1) et la membrane (5) du filtre-presse ;

C. une pompe refoulante (24) montée sur la première conduite ;

D. une seconde conduite (28) qui relie l'espace existant entre le manteau extérieur (1) et la membrane (5) du filtre-presse à la chambre à gaz (27) du conteneur ;

E. une pompe aspirante (33) pour la création d'une dépression dans la chambre à gaz (27) du conteneur (25) ;

F. un indicateur de niveau de liquide (35) pour le conteneur (25) ;

G. des détecteurs (36, 37, 38) réglables pour la détection de hauteurs déterminées du niveau du liquide dans le conteneur (25) ;

H. des interrupteurs (39, 40, 41) reliés aux détecteurs (36, 37, 38) qui réagissent quand sont atteintes les hauteurs déterminées du niveau du liquide et déclenchent des opérations de commande du filtre-presse, en particulier un arrêt du fonctionnement des pompes (24, 33).

2. Dispositif selon la revendication 1, caractérisé par un autre point remarquable ci-après :

I. un interrupteur à maximum (40) qui réagit quand la hauteur du niveau du liquide est supérieure d'une quantité donnée à la hauteur normale du niveau du liquide qui correspond de son côté à la quantité du fluide de pression introduit dans le conteneur.

3. Dispositif selon la revendication 1, caractérisé par un autre point remarquable ci-après :

J. un interrupteur à minimum (41) qui réagit quand la hauteur du niveau du liquide est inférieure d'une quantité déterminée à la hauteur normale du niveau du liquide qui correspond de son côté à la quantité du fluide de pression (26) introduit dans le conteneur.

4. Dispositif selon la revendication 1, caractérisé en ce que la première conduite (21) est reliée par l'intermédiaire d'une conduite de dérivation (42) à la partie inférieure du conteneur (25) remplie de fluide et cette conduite de dérivation (42) contient une soupape de sûreté (43) qui s'ouvre lorsque la pression dans la première conduite dépasse une valeur déterminée.

5. Dispositif selon la revendication 4, caractérisé en ce que la soupape de sûreté (43) est réglable à des valeurs déterminées de la pression.

6. Dispositif selon la revendication 1, caractérisé en ce que la pompe aspirante (33) peut être reliée à volonté par l'intermédiaire d'un distributeur de commande (45) à une soupape à dépression (46) au moyen de laquelle la pression dans la chambre à gaz (27) peut être réglée à une valeur déterminée.

7. Dispositif selon la revendication 1, caractérisé par une conduite d'air comprimé (47) contrôlée par un distributeur pour la production d'une surpression d'air dans l'espace compris entre le manteau extérieur (1) et la membrane (5) du filtre-presse.

EP 0 442 890 B1

*FIG.1*

FIG.2